# EUROPÄISCHE PATENTSCHRIFT

(11) **EP 1 199 097 B1**
(45) Veröffentlichungstag und Bekanntmachung des Hinweises auf die Patenterteilung: **16.06.2004**
(21) Anmeldenummer: 01123830.0
(22) Anmeldetag: 05.10.2001
(51) Int. Cl.: B01D 53/90, F01N 3/20

(54) **Einrichtung zur Abgasnachbehandlung von Dieselmotoren**
Device for treating an exhaust gas from a diesel engine
Dispositif de traitement des gaz d'échappement d'un moteur diesel

(30) Priorität: 19.10.2000 DE 10052077
(43) Veröffentlichungstag der Anmeldung: 24.04.2002
(73) Patentinhaber: Hydraulik-Ring GmbH, 09212 Limbach-Oberfrohna (DE)
(72) Erfinder: Palesch, Edwin, 73252 Lenningen (DE); Maisch, Dieter, 72664 Kohlberg (DE); Klotz, Stefan, 72631 Aichtal (DE)
(74) Vertreter: Kohl, Karl-Heinz, Dipl.-Ing.

(56) Entgegenhaltungen:
- DE-A- 19 729 003
- DE-A- 19 750 138
- US-A- 3 682 197
- US-A- 6 041 594

## Beschreibung

Die Erfindung betrifft eine Einrichtung zur Abgasnachbehandlung von Dieselmotoren nach dem Oberbegriff des Anspruches 1.

Für die Abgasnachbehandlung von Dieselmotoren werden SCR-Katalysatoren (selective catalytic reduction) eingesetzt. Hierbei wird NH₃ als Reduktionsmittel zur NOₓ-Reduktion eingesetzt. NH₃ wird durch Hydro- und Thermolyse aus einer 32,5-%igen Harnstofflösung in einem Dosierblock gewonnen und mit Luft gemischt in das Abgas vor dem Katalysator eingespritzt. Die Harnstofflösung muß mit einem bestimmten Druck dem Dosierblock zugeführt werden. Die Harnstofflösung befindet sich in einem Vorratsbehälter, aus dem sie mit einer Pumpe in den Mischbereich gefördert wird (USA 6,041,594). In ihn wird außerdem Druckluft zugeführt. Innerhalb des Mischbereiches erfolgt die Vermischung von Druckluft und Harnstofflösung. Dabei entsteht ein Nebelgemisch, das dem Katalysator zugeführt wird. Problematisch ist das Nachfüllen der Harnstofflösung in den Vorratsbehälter, da entsprechende Nachfüllstationen noch nicht vorhanden sind bzw. erst aufgebaut werden müssen.

Der Erfindung liegt die Aufgabe zugrunde, die gattungsgemäße Einrichtung so auszubilden, daß eine problemlose Versorgung mit Harnstofflösung sichergestellt ist. Dabei soll die Harnstofflösung in einfacher Weise dem Mischbereich zugeführt werden können.

Diese Aufgabe wird bei der gattungsgemäßen Einrichtung erfindungsgemäß mit den kennzeichnenden Merkmalen des Anspruches 1 gelöst.

Der erfindungsgemäße Vorratsbehälter ist ein Nachfüllbehälter mit einer flexiblen Wandung. Dieser Nachfüllbehälter kann vom Fahrer des Kraftfahrzeuges, insbesondere eines Lastkraftwagens, bequem mitgeführt und bei Bedarf in die erfindungsgemäße Einrichtung eingesetzt werden. Da der Vorratsbehälter an seinem Verschluß den Anschluß für die Pumpenleitung aufweist, kann er bequem an die Pumpenleitung angeschlossen werden. Die flexiblen Nachfüllbehälter können nach dem Verbrauch der Harnstofflösung sehr klein zusammengelegt werden, so daß sie als Abfallprodukt nur wenig Raum beanspruchen. Darum ist die Entsorgung der leeren Nachfüllbehälter problemlos möglich.

Bei einer vorteilhaften Ausbildung wird zur Förderung der Harnstofflösung aus dem Vorratsbehälter in den Mischbereich eine Pumpe nicht benötigt. Vielmehr strömt die Harnstofflösung unter ihrem Eigengewicht in die Zuführleitung, in der sie zum Mischbereich gelangt. Infolge des Wegfalls der Pumpe hat die erfindungsgemäße Einrichtung einen konstruktiv einfachen Aufbau. Sie läßt sich zudem kostengünstig herstellen.

Bei einer weiteren vorteilhaften Ausbildung befindet sich der Vorratsbehälter in einer Druckkammer, der über die Druckluft-Zuführleitung Druckluft zugeführt wird. Der Vorratsbehälter wird unter Außendruck gesetzt, so daß die Harnstofflösung zusätzlich auch noch durch die Druckbeaufschlagung in die Zuführleitung strömt. Dadurch ist gewährleistet, daß die Harnstofflösung zuverlässig in die Zuführleitung strömt.

Vorteilhaft ist die Wandung des Vorratsbehälters faltenbalgartig ausgebildet. Die Wandung wird durch äußere Druckbeaufschlagung elastisch verformt, wodurch die im Vorratsbehälter befindliche Harnstofflösung zuverlässig in die Zuführleitung gelangt.

Weitere Merkmale der Erfindung ergeben sich aus den weiteren Ansprüchen, der Beschreibung und den Zeichnungen.

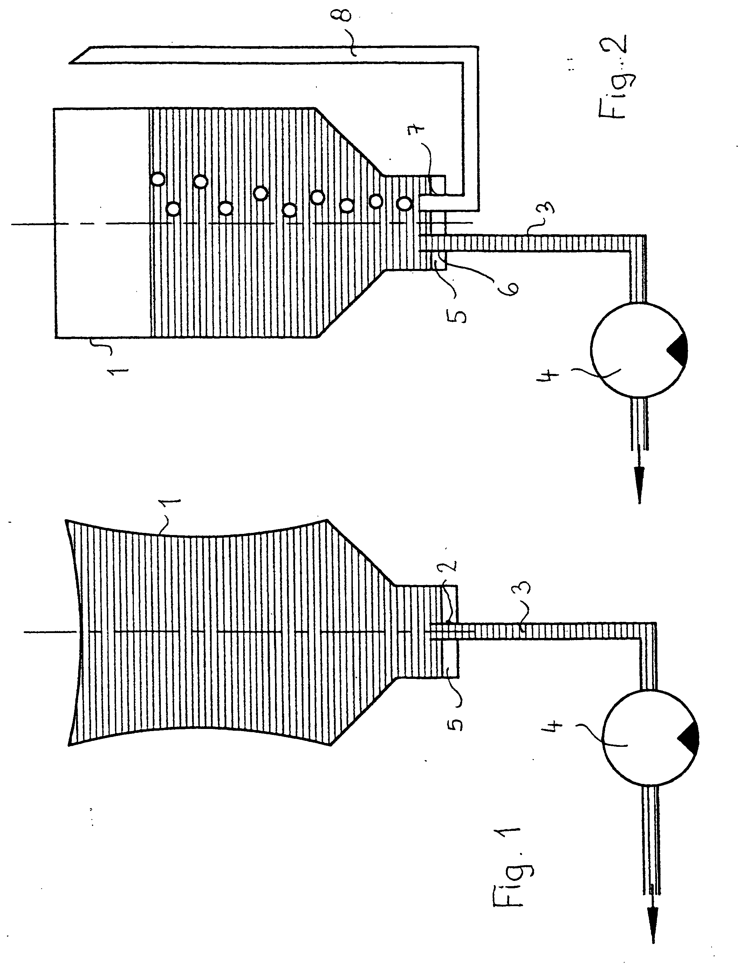

Die Erfindung wird anhand einiger in den Zeichnungen dargestellter Ausführungsformen näher erläutert. Es zeigen
- Fig. 1 bis Fig. 14: jeweils verschiedene Ausführungsformen von Einrichtungen zur Abgasnachbehandlung von Dieselmotoren.

Für die Abgasnachbehandlung von Dieselmotoren werden sogenannte SCR-Katalysatoren (selective catalytic reduction Katalysatoren) eingesetzt. Bei diesem Verfahren wird NH₃ als Reduktionsmittel zur NOₓ-Reduktion eingesetzt. NH₃ wird durch Hydro- und Thermolyse aus einer 32,5 %-igen Harnstofflösung in einem Dosierblock gewonnen und mit Luftgemisch in das Abgas vor dem SCR-Katalysator eingespritzt. Die Harnstofflösung wird mit einem bestimmten Druck einem Dosierblock zugeführt.

Bei der Ausführungsform gemäß Fig. 1 ist die Harnstofflösung in einem flexiblen Behälter 1 untergebracht, der mit einem Anschluß 2 versehen ist, mit dem der Vorratsbehälter 1 auf eine Pumpenleitung 3 gesteckt werden kann. Mit einer Pumpe 4 wird die Harnstofflösung einer nachfolgenden (nicht dargestellten) Mischkammer zugeführt. Der Anschluß 2 des Behälters 1 ist an einem Behälterverschluß 5 vorgesehen und kann beispielsweise durch eine Öffnung im Verschluß gebildet sein, die zunächst durch eine Folie oder ein anderes Verschlußstück geschlossen ist. Der Behälterverschluß 5 ist verdickt ausgebildet, so daß er einfach auf die Pumpenleitung 3 gesteckt werden kann. Der Verschluß kann so ausgebildet sein, daß er beim Aufstecken des Behälters 1 durch die Pumpenleitung 3 durchstoßen wird. Der Querschnitt der Öffnung im Verschluß 5 ist an den Außendurchmesser der Pumpenleitung 3 angepaßt, so daß nach dem Aufsetzen des Behälters 1 keine Harnstofflösung durch die Öffnungen nach außen dringen kann.

Mit der Pumpe 4 wird die Harnstofflösung aus dem flexiblen Behälter 1 gepumpt und der Mischkammer zugeführt. In diese Mischkammer mündet außerdem eine Luftzuführleitung, über welche Luft in erforderlichem Maße der Harnstofflösung unter Druck zugeführt wird. In der Mischkammer werden die Harnstofflösung und die Druckluft intensiv vermischt, wodurch ein Nebelgemisch entsteht, das dem Katalysator zugeführt wird.

Der Behälter 1 besteht vorteilhaft aus flexiblem Kunststoff. Beim Abpumpen der Harnstofflösung zieht sich der flexible Behälter 1 infolge des entstehenden Unterdrucks zusammen, so daß der geleerte Behälter 1 in vorteilhafter Weise zusammengezogen ist. Der geleerte Behälter 1 benötigt darum nur geringen Raum bei der Abfallbeseitigung. Die flexiblen Behälter 1 können vom Fahrer des Fahrzeuges mitgeführt und bei Bedarf ausgewechselt werden. Zudem kann der Behälter 1 kostengünstig gefertigt werden.

Bei der Ausführungsform nach Fig. 2 ist der Behälter 1 formstabil und in Form einer festen Kartusche ausgebildet. Der Verschluß 5 dieses Behälters 1 hat einen Durchtritt 6 für die Pumpenleitung 3 und einen Durchtritt 7 für eine Luftzuführleitung 8. Mit der Pumpe 4 wird die im Behälter 1 befindliche Harnstofflösung in der beschriebenen Weise abgepumpt und der (nicht dargestellten) Mischkammer zugeführt, in der die Harnstofflösung mit Druckluft zu einem feinen Nebelgemisch vermischt wird. In dem Maße, in dem die Harnstofflösung dem Behälter 1 entnommen wird, wird über die Zuführleitung 8 Luft in den Behälter 1 geführt. Die Zuführung der Luft über die Zuführleitung 8 ist problemlos möglich (atmosphärischer Druck). In Lastkraftwagen, wo ein Druckluftsystem zur Verfügung steht, kann der Behälter äuch unter Druck gesetzt werden. Die Behälter 1 können ebenfalls einfach vom Fahrer mitgeführt und bei Bedarf ausgewechselt werden.

Durch die Verwendung der Behälter 1 gemäß den Fig. 1 und 2 werden logistische Probleme bei der Versorgung der Einrichtung mit der notwendigen Harnstofflösung auf einfache Weise vermieden.

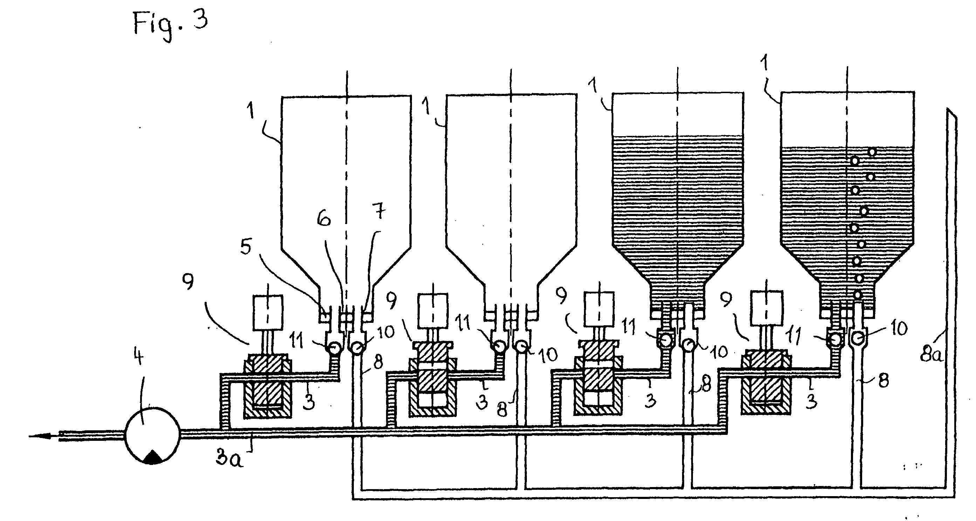

Fig. 3 zeigt eine Einrichtung, bei der mehrere Behälter 1 nebeneinander angeordnet und gemeinsam an die Pumpe 4 angeschlossen sind. Die Behälter 1 sind entsprechend der Ausführungsform gemäß Fig. 2 ausgebildet. Der Verschluß 5 ist jeweils mit den beiden Durchtritten 6, 7 für die Pumpenleitung 3 und die Zuführleitung 8 versehen. Die Pumpenleitungen 3 sind an eine gemeinsame Pumpenleitung 3a angeschlossen, in der die Pumpe 4 sitzt. In jeder Pumpenleitung 3 sitzt jeweils ein Schaltventil 9, mit dem die Pumpenleitungen 3 unabhängig voneinander geöffnet und geschlossen werden können. Auch die Zuführleitungen 8 münden in eine gemeinsame Zuführleitung 8a. In den Zuführleitungen 8 sitzt vor dem Eintritt in den jeweiligen Vorratsbehälter 1 jeweils ein Schwimmerventil 10. Auch in den Pumpenleitungen 3 sitzt vor dem Zutritt zum Behälter 1 jeweils ein Schwimmerventil 11.

Im dargestellten Ausführungsbeispiel sind die Schaltventile 9 des rechten und des linken Behälters 1 so eingestellt, daß die Pumpenleitungen 3 mit der gemeinsamen Pumpenleitung 3a verbunden sind. Die Schaltventile 9 der beiden mittleren Behälter 1 befinden sich in einer Schließstellung, in welcher sie die Pumpenleitungen 3 verschließen. Der in Fig. 3 linke Behälter 1 ist vollständig entleert, während der rechte Behälter noch weitgehend gefüllt ist. Von den beiden mittleren Behältern ist der linke Behälter vollständig entleert, während der rechte Behälter noch Harnstofflösung enthält. Die Pumpe 4 pumpt die Harnstofflösung aus den in Fig. 3 rechten und linken Behärtern 1, deren Schaltventile 9 geöffnet sind. Über die Zuführleitungen 8 wird in dem Maße, in dem die Harnstofflösung dem jeweiligen Behälter entnommen wird, Luft nachgefüllt. Sobald der jeweilige Behälter 1 leer ist, wird er durch Umschalten des Schaltventils 9 von der Pumpenleitung 3 getrennt, so daß er problemlos ausgewechselt werden kann.

Die Behälter 1 können formstabile Behälter entsprechend der Ausführungsform gemäß Fig. 2 oder flexible Behälter entsprechend dem Ausführungsbeispiel nach Fig. 1 sein.

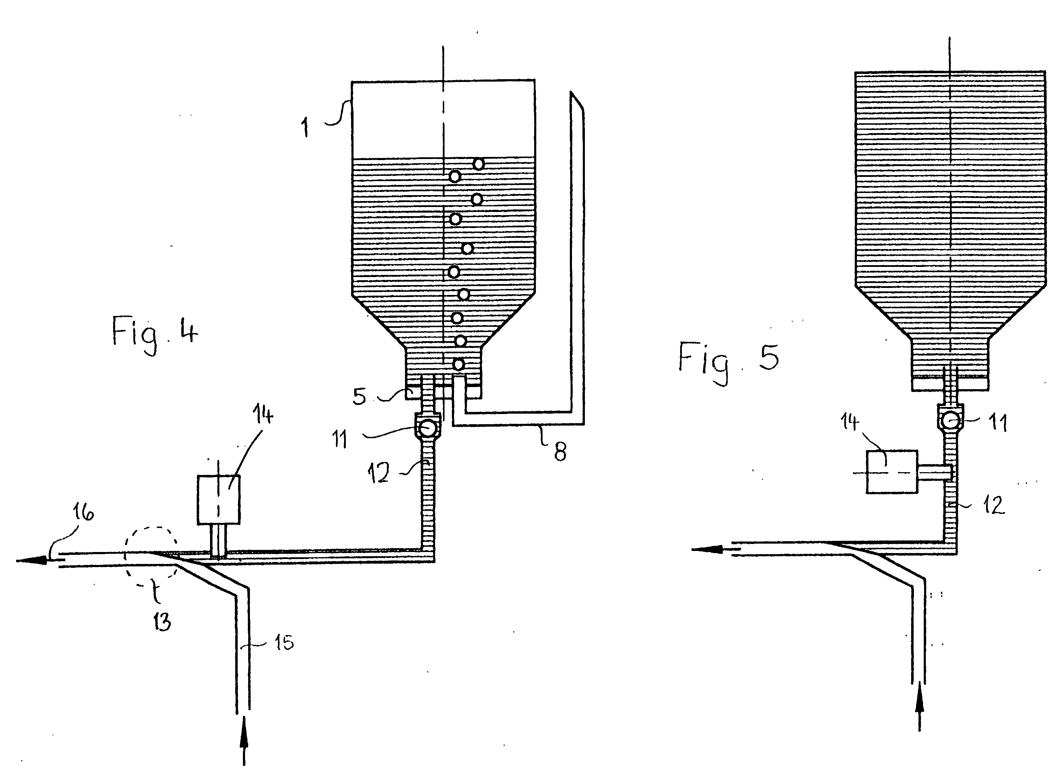

Fig. 4 zeigt eine Ausführungsform, bei der die Harnstofflösung ohne Pumpe der nachfolgenden (nicht dargestellten) Mischkammer zugeführt wird. Der Behälter 1 wird mit seinem Verschluß 5 auf die Zuführleitung 8 und eine Förderleitung 12 aufgesetzt. Über die Leitung 8 wird unter Atmosphärendruck stehende Luft in den Behälter 1 eingeführt. Die Luft im Behälter 1 verhindert die Bildung eines Unterdrukkes und sorgt dafür, daß die Harnstofflösung einwandfrei über die Förderleitung 12 einem Mischbereich 13 zugeführt wird. In der Förderleitung 12 sitzt entsprechend der Ausführungsform nach Fig. 3 das Schwimmerventil 11, das die in Fig. 4 dargestellte Offenstellung einnimmt, solange Harnstofflösung aus dem Behälter 1 durch die Förderleitung 12 strömt. In Strömungsrichtung vor dem Mischbereich 13 sitzt in der Förderleitung 12 eine Dosiereinrichtung 14, mit welcher die Durchflußmenge der Harnstofflösung eingestellt werden kann.

In den Mischbereich 13 mündet eine Druckluftleitung 15, die mit der zugeführten Harnstofflösung in der beschriebenen Weise vermischt wird. Das entstehende Nebelgemisch wird in Strömungsrichtung 16 dem Katalysator zugeführt.

Der Behälter 1 ist im Fahrzeug so angeordnet, daß die Harnstofflösung so lange in die Förderleitung 12 strömt, bis der Behälter 1 leer ist.

Die Ausführungsform nach Fig. 5 unterscheidet sich vom vorigen Ausführungsbeispiel lediglich dadurch, daß die Dosiereinrichtung 14 unmittelbar hinter dem Schwimmerventil 11 in der Förderleitung 12 sitzt. Im übrigen ist diese Ausführungsform gleich ausgebildet wie das Ausführungsbeispiel nach Fig. 4.

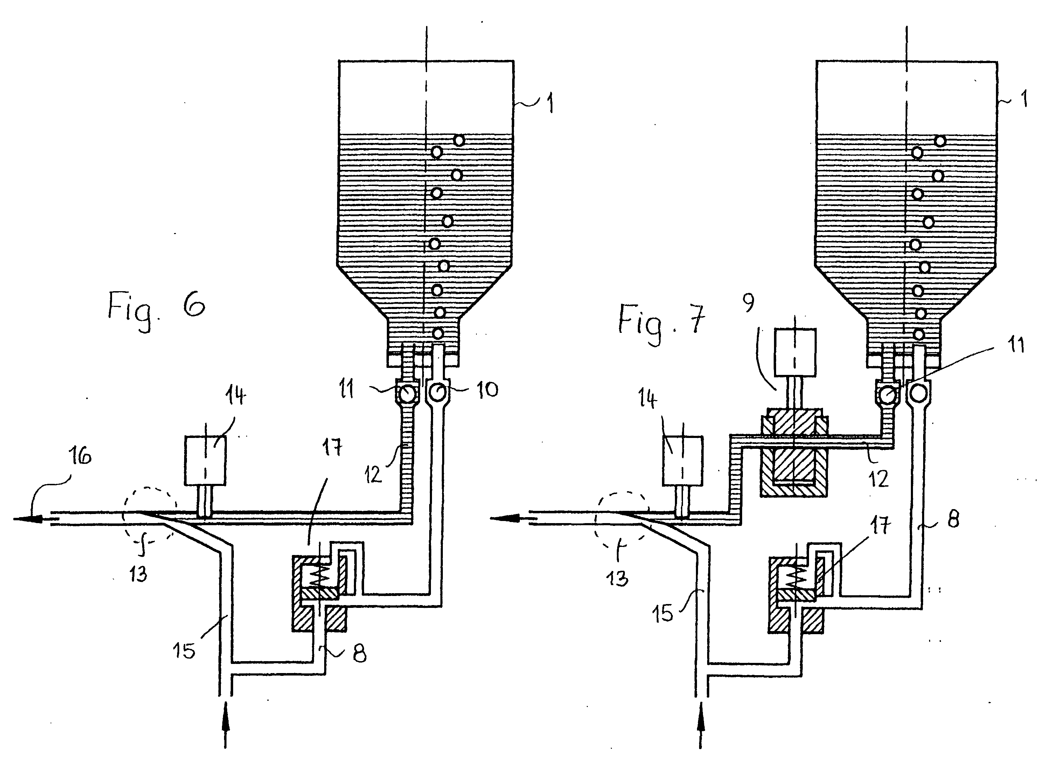

Bei der Ausführungsform nach Fig. 6 ist an die Druckluftleitung 15 in Strömungsrichtung vor der Dosiereinrichtung 14 die Zuführleitung 8 angeschlossen, in der ein Druckreduzierventil 17 sitzt. Mit ihm wird der Druck der Druckluft so weit herabgesetzt, daß die im Behälter 1 befindliche Harnstofflösung durch die Druckluft noch in vermindertem Maße unter Druck gesetzt wird. Dadurch wird sichergestellt, daß die Harnstofflösung über das Schwimmerventil zuverlässig in die Förderleitung 12 strömt. Entsprechend der Ausführungsform nach Fig. 3 sitzt in der Zuführleitung 8 unmittelbar vor dem Behälter 1 das Schwimmerventil 10, das geöffnet ist, solange die im Druck reduzierte Druckluft zugeführt wird.

In der Förderleitung 12 sitzt die Dosiereinrichtung 14, mit der die Harnstofflösung in der gewünschten Menge dem Mischbereich 13 zugeführt wird, in dem sie mit der über die Druckleitung 15 zugeführten Druckluft vernebelt wird. Dieses Nebelgemisch wird dann in Strömungsrichtung 16 dem Katalysator zugeführt.

Bei der Ausführungsform nach Fig. 7 sitzt in der Förderleitung 12 im Bereich zwischen der Dosiereinrichtung 14 und dem Schwimmerventil 11 das Schaltventil 9, mit dem die Förderleitung 12 verschlossen werden kann. Auch bei dieser Ausführungsform gelangt die Druckluft über die Druckluftleitung 15 in den Mischbereich 13, in dem sie mit der über die Förderleitung 12 zugeführten Harnstofflösung vermischt wird. Die Druckluft gelangt außerdem über das Druckreduzierventil 17 in die Zuführleitung 8, in der die druckreduzierte Druckluft in den Behälter 1 strömt.

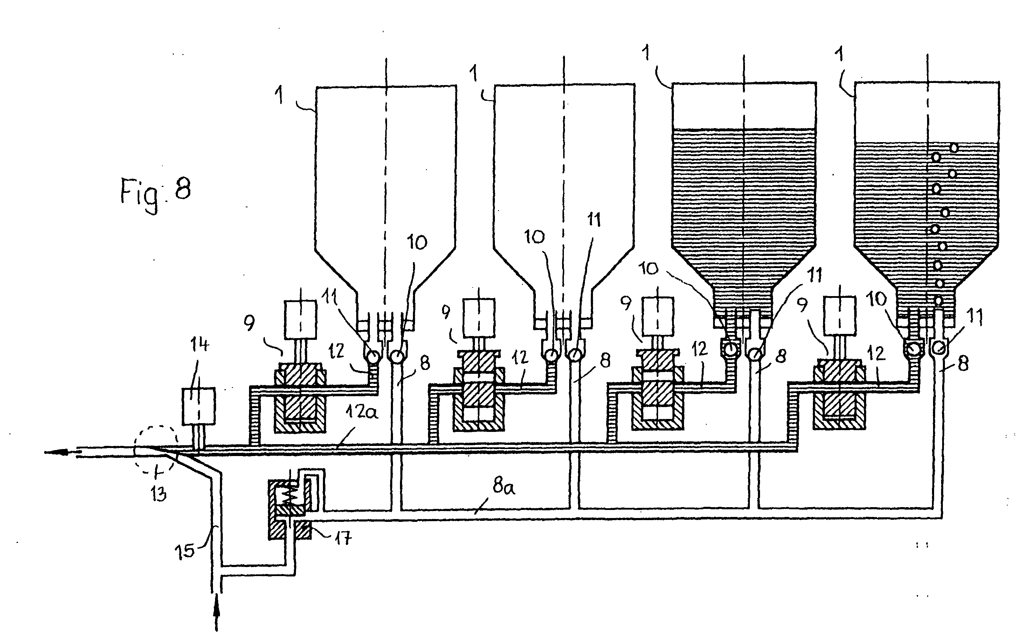

Bei der Ausführungsform nach Fig. 8 sind mehrere Behälter 1 nebeneinander angeordnet. Jeder Behälter 1 ist auf jeweils eine Förderleitung 12 und die Zuführleitung 8 gesteckt. In jeder Zuführleitung 8 sitzt ein Schaltventil 9, um die Behälter 1 wahlweise sperren oder zuschalten zu können. Die Förderleitungen 12 münden in eine gemeinsame Förderleitung 12a, in der unmittelbar vor dem Mischbereich 13 die Dosiereinrichtung 14 sitzt. Auch die Zuführleitungen 8 sind an die gemeinsame Zuführleitung 8a angeschlossen, in welcher das Druckreduzierventil 17 liegt. Die gemeinsame Zuführleitung 8a mündet in die Druckluftleitung 15, über welche die Druckluft in den Mischbereich 13 gelangt. Hier wird sie in der beschriebenen Weise mit der Harnstofflösung vermischt und vernebelt. Ein Teil der Druckluft gelangt über das Druckreduzierventil 17 in die gemeinsame Zuführleitung 8a und von dort über die jeweiligen Zuführleitungen 8 in die Behälter 1.

Im dargestellten Ausführungsbeispiel sind die linken und rechten Schaltventile 9 geöffnet, so daß eine Verbindung zwischen der gemeinsamen Förderleitung 12a und den beiden Vorratsbehältern 1 besteht. Die beiden mittleren Schaltventile 9 sind geschlossen. Solange die Harnstofflösung in die Zuführleitungen 8 strömt und die Druckluft über die Zuführleitungen 8 in den jeweiligen Behälter 1 strömt, sind die Schwimmerventile 10, 11 geöffnet.

Wie schon bei der Ausführungsform nach Fig. 3 können die Behälter 1 wahlweise über die Schaltventile 9 zugeschaltet werden, so daß eine optimale Gemischaufbereitung gewährleistet ist. Bei einer einfachsten Ausführungsform werden die Schaltventile 9 manuell betätigt. Vorteilhaft ist es jedoch, wenn die Schaltventile 9 über eine Steuerung automatisch geöffnet bzw. geschlossen werden.

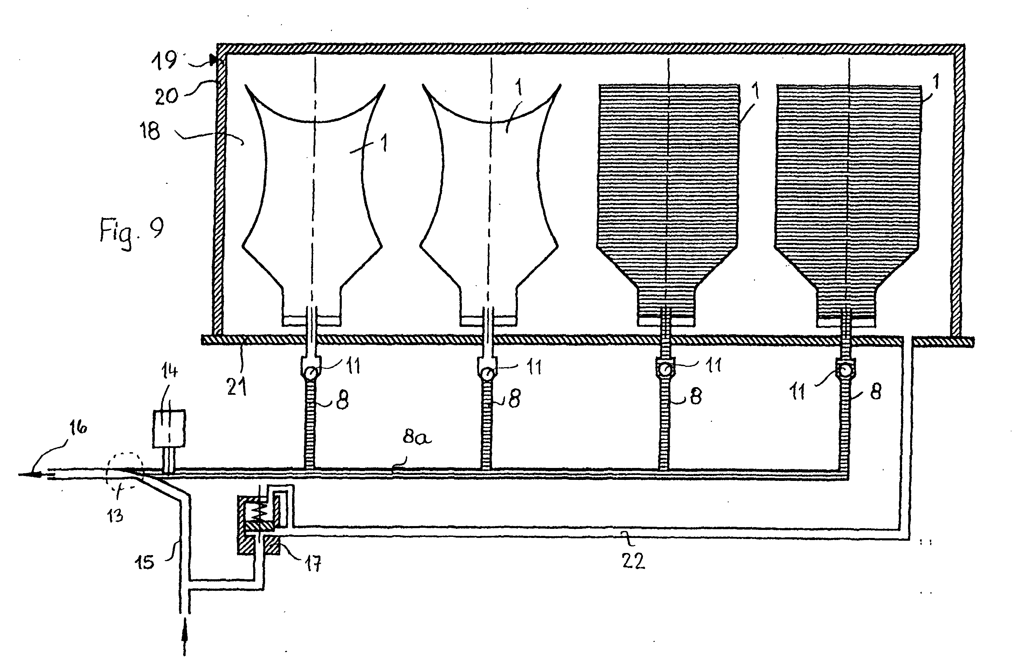

Fig. 9 zeigt ein Ausführungsbeispiel, bei dem die Behälter 1 in einer Kammer 18 untergebracht sind. Sie wird von einem Gehäuse 19 umschlossen, das einen abnehmbaren Deckel 20 aufweist. Er ist im Ausführungsbeispiel haubenförmig ausgebildet und kann zum Auswechseln der Behälter 1 einfach von einer Grundplatte 21 des Gehäuses 19 abgenommen werden. Selbstverständlich kann das Gehäuse 19 jede beliebige Form haben. Wesentlich ist nur, daß ein abnehmbarer Gehäuseteil vorgesehen ist, der einerseits zum Auswechseln der Behälter 1 einfach abgenommen werden kann, andererseits jedoch in seiner Schließlage die Kammer 18 luftdicht abschließt.

In die Kammer 18 mündet wenigstens eine Druckluftleitung 22, die in die Druckluftleitung 15 mündet und in der das Druckreduzierventil 17 sitzt. Außerdem münden in die Kammer 18 die Enden der Zuführleitungen 8, auf welche die Behälter 1 innerhalb der Kammer 18 gesteckt sind. Die Zuführleitungen 8 sind an die gemeinsame Zuführleitung 8a angeschlossen, in welcher unmittelbar vor dem Mischbereich 13 die Dosiereinrichtung 14 sitzt. In den Zuführleitungen 8 sitzt unmittelbar vor dem Eintritt in die Kammer 18 das Schwimmerventil 11.

Die Behälter 1 in der Kammer 18 sind entsprechend der Ausführungsform nach Fig. 1 flexibel ausgebildet. Damit die Harnstofflösung aus diesen flexiblen Behältern 1 zuverlässig über die Zuführleitungen 8 in den Mischbereich 13 strömt, wird Druckluft über das Druckreduzierventil 17 und die Druckluftleitung 22 in die Kammer 18 geführt. Dadurch werden die in der Kammer 18 befindlichen flexiblen Behälter 1 von außen mit Druck beaufschlagt, wodurch die Harnstofflösung zuverlässig in die Zuführleitungen 8 strömt. Das Druckreduzierventil 17 sorgt wie bei den Ausführungsformen nach den Fig. 6 bis 8 dafür, daß die Harnstofflösung unter einem vorgegebenen Druck in die Zuführleitungen 8 strömt. Das Druckreduzierventil 17 kann bei den entsprechenden Ausführungsformen auf einen vorgegebenen Druckwert eingestellt sein. Es ist aber auch möglich, das Druckreduzierventil 17 einstellbar auszubilden, so daß je nach Anforderung ein unterschiedlich hoher Druck eingestellt werden kann, mit dem die Druckluft über die Leitung 22 in die Kammer 18 strömt.

Im dargestellten Ausführungsbeispiel sind die beiden linken Behälter 1 bereits geleert, wodurch sie sehr stark zusammengezogen sind. Die Schwimmerventile 11 schließen die Zuführleitungen 8 ab, da keine Harnstofflösung mehr in ihnen strömt. Die beiden rechten Behälter 1 sind noch mit Harnstofflösung gefüllt. Die entsprechenden Schwimmerventile 11 in den Zuführleitungen 8 sind geöffnet, so daß die Harnstofflösung aus dem Behälter 1, unterstützt durch den in der Kammer 18 herrschenden Druck, in die Zuführleitungen 8 einwandfrei strömen kann. Im Mischbereich 13 hinter der Dosiereinrichtung 14 wird die Harnstofflösung mit der Druckluft in der beschriebenen Weise vermischt. Das entstehende Nebelgemisch wird in Strömungsrichtung 16 dem Katalysator zugeführt.

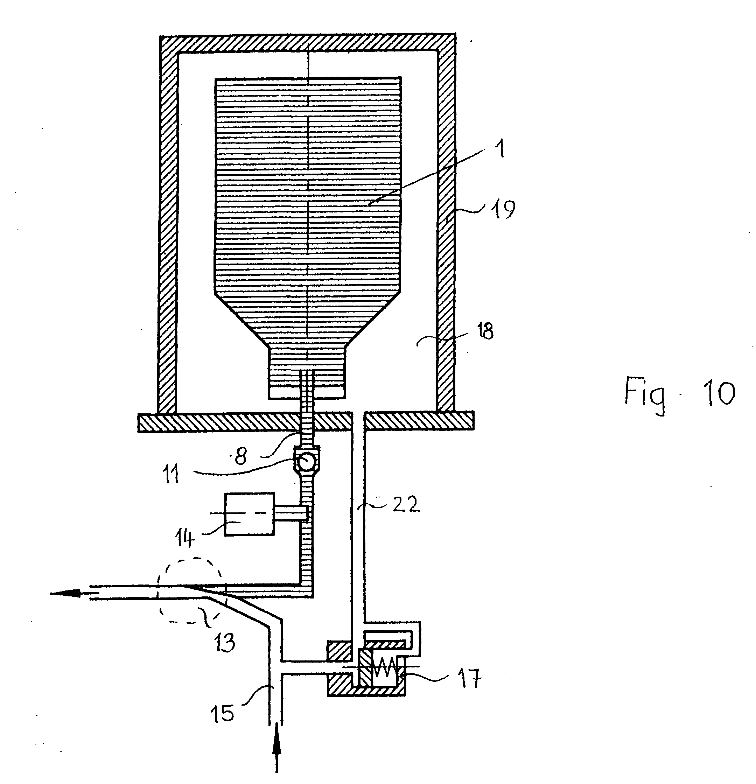

Fig. 10 zeigt im Vergleich zur Ausführungsform nach Fig. 9 ein vereinfachtes Ausführungsbeispiel, bei dem im Gehäuse 19 nur ein einziger Behälter 1 untergebracht ist. Er wird auf das in die Kammer 18 ragende Ende der Zuführleitung 8 gesteckt. Unmittelbar hinter dem Schwimmerventil 11 in der Zuführleitung 8 sitzt die Dosiereinrichtung 14, mit der die Durchflußmenge an Harnstofflösung genau eingestellt werden kann. Die Dosiereinrichtung 14 kann so ausgebildet sein, daß mit ihr manuell die Durchflußmenge eingestellt werden kann. Vorteilhaft wird die Dosiereinrichtung 14 jedoch über eine Steuereinrichtung gesteuert eingestellt, so daß die erforderliche Menge an Harnstofflösung optimal dem Mischbereich 13 zugeführt werden kann.

In die Kammer 18 mündet die Druckluftleitung 22, in der das Druckreduzierventil 17 sitzt und die in die Druckluftleitung 15 mündet. Die der Druckversorgung des Fahrzeuges entnommene Druckluft strömt somit über die Druckluftleitung 15 unter dem durch die Druckversorgung vorgegebenen Druck in den Mischbereich 13, in dem sie mit der zugeführten Harnstofflösung in der beschriebenen Weise vermischt wird. Ein Teil dieser Druckluft strömt über die abzweigende Druckluftleitung 22 durch das Druckreduzierventil 17, das den Druck der Druckluft vor dem Eintritt in die Kammer 18 auf ein vorgegebenes Maß verringert. Der Behälter 1 ist wiederum flexibel ausgebildet und wird durch die Druckluft in der Kammer 18 von außen mit Druck beaufschlagt. Dadurch kann die Harnstofflösung, unterstützt durch diesen Außendruck, zuverlässig über die Zuführleitung 8 zum Mischbereich 13 strömen.

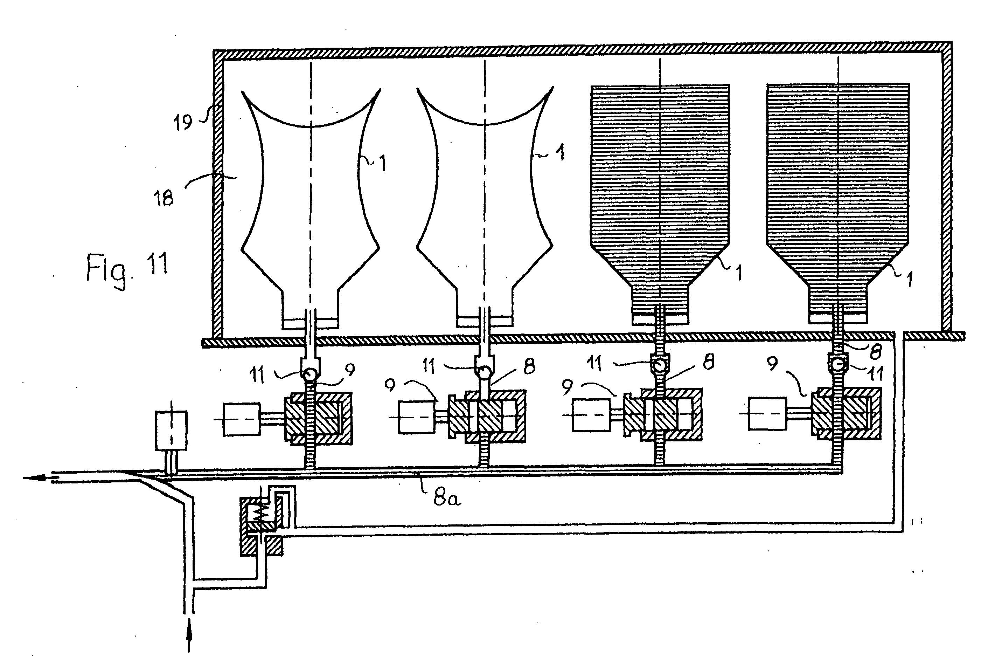

Die Ausführungsform gemäß Fig. 11 ist im wesentlichen gleich ausgebildet wie das Ausführungsbeispiel nach Fig. 9. Der Unterschied liegt lediglich darin, daß in den jeweiligen Zuführleitungen 8 im Bereich zwischen dem Schwimmerventil 11 und der Mündung in die gemeinsame Zuführleitung 8a jeweils ein Schaltventil 9 sitzt. Damit kann jeder Behälter 1 in der Kammer 18 des Gehäuses 19 in der erforderlichen Weise zugeschaltet oder abgeschaltet werden. Im übrigen arbeitet diese Vorrichtung gleich wie die Ausführungsform gemäß Fig. 9.

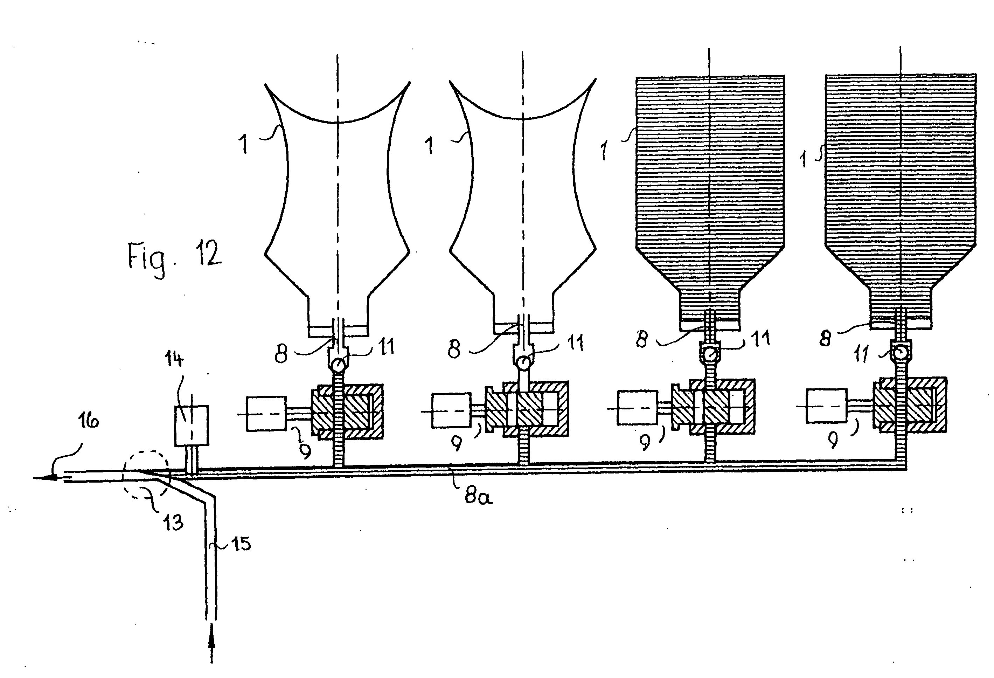

Fig. 12 zeigt eine Vorrichtung, bei der die Harnstofflösung in den flexiblen Behältern 1 untergebracht ist. Die beiden in Fig. 12 linken Behälter 1 sind leer, während die beiden rechten Behälter 1 gefüllt sind. Die flexiblen Behälter 1 sind in der beschriebenen Weise jeweils auf das freie Ende der Zuführleitungen 8 gesteckt, die an die gemeinsame Zuführleitung 8a angeschlossen sind. Im Bereich zwischen dem Schwimmerventil 11 und der Mündung in die gemeinsame Zuführleitung 8a sitzt in jeder Zuführleitung 8 ein Schaltventil 9, mit dem jeder Behälter 1 je nach Bedarf zu- oder abgeschaltet werden kann. Die Harnstofflösung strömt, unterstützt durch den atmosphärischen Außendruck, über das geöffnete Schaltventil 9 in die gemeinsame Zuführleitung 8a.

Unmittelbar vor dem Mischbereich 13 sitzt in der gemeinsamen Zuführleitung 8a die Dosiereinrichtung 14, mit der die zuzuführende Menge an Harnstofflösung genau eingestellt werden kann. In den Mischbereich 13 mündet die Druckluftleitung 15, über die die Druckluft aus dem Druckluftversorgungssystem des Fahrzeuges zugeführt wird. Im Mischbereich 13 erfolgt unter Ausnutzung des Venturieffektes die Vermischung mit der Harnstofflösung. Das entstehende Nebelgemisch wird in Strömungsrichtung 16 dem Vergaser zugeführt.

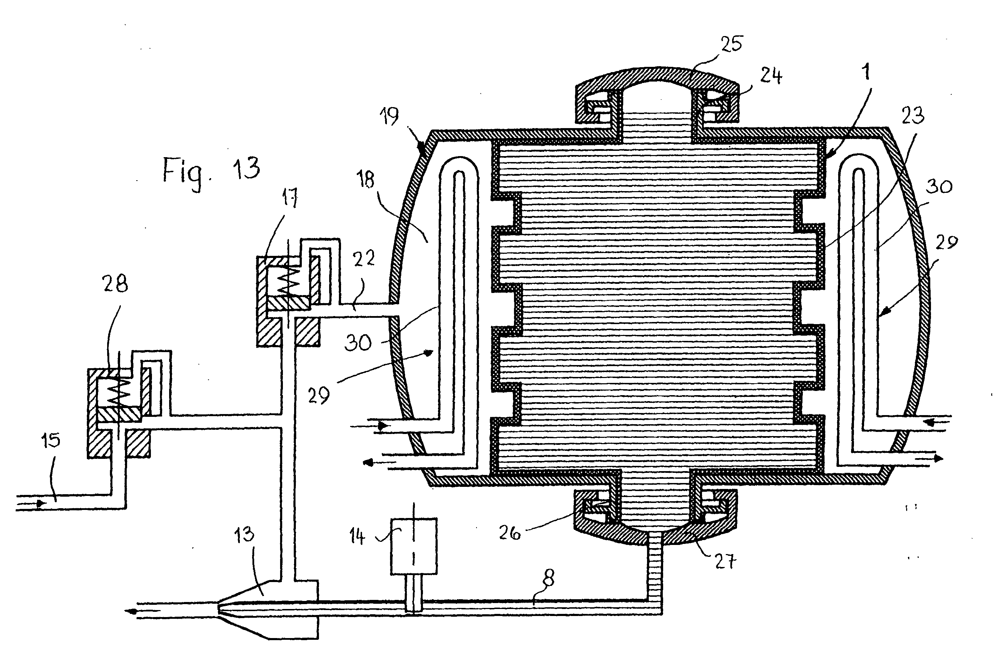

Fig. 13 zeigt einen Behälter 1, der in einer Druckluftkammer 18 des Gehäuses 19 untergebracht ist. Die Wandung 23 des Behälters 1 ist membranförmig ausgebildet und besteht aus elastisch dehnbarem Material.

Das Gehäuse 19 hat einen Befüllstutzen 24, der durch einen Deckel 25 geschlossen werden kann. Am Gehäuse 19 ist außerdem ein Auslaßstutzen 26 vorgesehen, auf den ein Deckel 27 aufgesetzt ist. An ihn ist die Zuführleitung 8 angeschlossen, über die die im Behälter 1 befindliche Harnstofflösung dem Mischbereich 13 zuströmen kann. Im Bereich zwischen dem Auslaßstutzen 26 und dem Mischbereich 13 sitzt die Dosiereinrichtung 14.

Der Mantel 23 des Behälters 1 ist so ausgebildet, daß er an der Innenwand der Stutzen 24, 26 anliegt und diese am freien Ende übergreift. Die Deckel 25, 27 sind so ausgebildet, daß sie unter Zwischenlage des Behältermantels 23 auf der Stirnseite des jeweiligen Stutzens 24, 26 aufliegen.

In eine Stirnseite des Gehäuses 19 mündet die Druckluftleitung 22, mit der im Druck reduzierte Druckluft in die Kammer 18 gefördert wird. Die Druckluft wird dem Druckluftversorgungssystem des Fahrzeuges entnommen und gelangt zunächst in die Druckluftleitung 15. In ihr sitzt ein Druckreduzierventil 28, mit dem der Druck der Druckluft auf das erforderliche Maß herabgesetzt wird. Ein Teil dieser Druckluft strömt anschließend zur Mischkammer 13, während ein anderer Teil über das Druckreduzierventil 17 und die Druckluftleitung 22 in die Kammer 18 strömt. Da die Druckluft vor dem Eintritt in die Kammer 18 durch zwei Druckreduzierventile 17, 28 strömt, hat die in die Kammer 18 eintretende Druckluft einen kleineren Druckwert als die in den Mischbereich 13 strömende Druckluft.

Die im Behälter 1 befindliche Harnstofflösung strömt, unterstützt durch den Druck in der Kammer 18, durch die Zuführleitung 8 in den Mischbereich 13. Aufgrund der Druckluftbeaufschlagung wird der flexible Mantel 23 des Behälters 1 zusammengedrückt, so daß die Harnstofflösung zuverlässig in die Zuführleitung 8 gedrückt wird. Der Mäntel 23 besteht vorteilhaft aus elastomerem Werkstoff, wie beispielsweise Gummi.

Im Bereich zwischen dem Behälter 1 und der Wandung des Gehäuses 19 ist eine Heizeinrichtung 29 untergebracht, die dann betätigt wird, wenn so tiefe Außentemperaturen herrschen, daß die Harnstofflösung in den festen Zustand übergeht. Die Heizung kann elektrisch oder mit einem Heizmedium erfolgen. Im dargestellten Ausführungsbeispiel sind Heizungsrohre 30 vorgesehen, durch die das jeweilige Heizmedium in Richtung der eingezeichneten Strömungspfeile strömt. Im dargestellten Ausführungsbeispiel ist an zwei einander gegenüberliegenden Seiten des Behälters 1 jeweils eine Heizeinrichtung 29 vorgesehen, so daß eine optimale Erwärmung der Harnstofflösung bei tiefen Außentemperaturen gewährleistet ist.

Die beiden Deckel 25, 27 auf den Stutzen 24, 26 sind druckbeständig. Der Deckel 25 läßt sich bequem vom Befüllstutzen 24 abnehmen, um einen leeren Behälter 1 wieder mit Harnstofflösung befüllen zu können. Da der Mantel 23 die Stirnseiten der beiden Stutzen 24, 26 übergreift und die Deckel 25, 27 in der Schließstellung auf ihnen aufsitzen, werden die beiden Stutzen durch diesen Teil des flexiblen Mantels 23 abgedichtet.

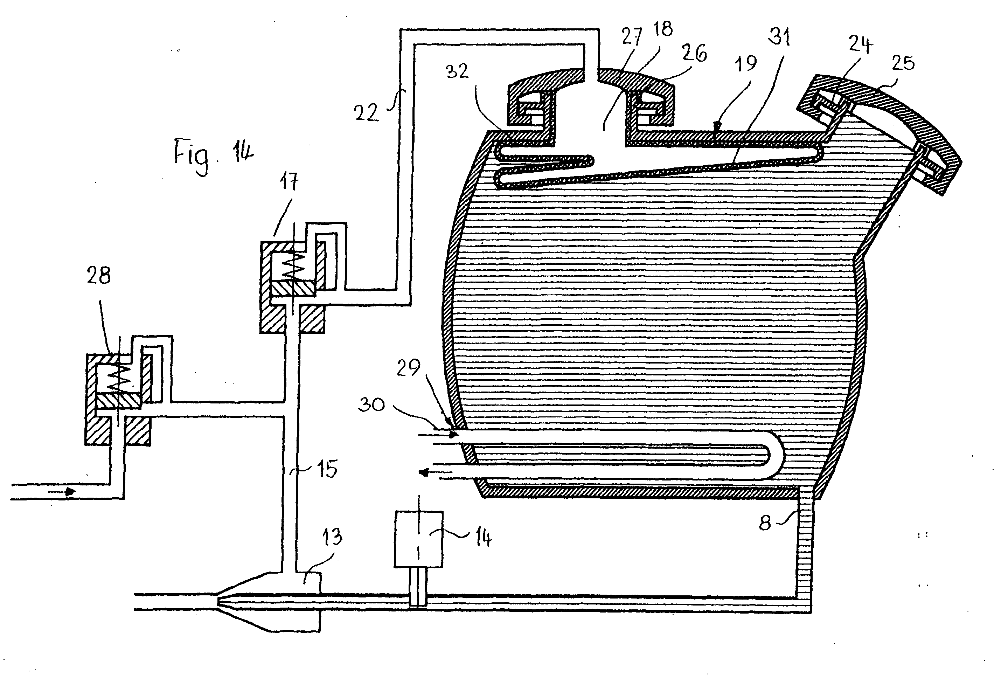

Fig. 14 zeigt ein Ausführungsbeispiel, bei dem der Behälter 19 mit dem Befüllstutzen 24 und dem Auslaßstutzen 26 versehen ist. Im Unterschied zur vorigen Ausführungsform sind diese beiden Stutzen 24, 26 nicht an einander gegenüberliegenden Seiten des Gehäuses 19, sondern an der gleichen Seite des Gehäuses angeordnet. Beide Stutzen werden durch die Deckel 25, 27 geschlossen. An den Auslaßstutzen 26 schließt eine Druckmembran 31 an, die an der Innenwand des Auslaßstutzens 26 anliegt und sich über dessen Stirnseite hinaus nach außen erstreckt. Entsprechend der vorigen Ausführungsform ist die Druckmembran 31 an der Innenwand des Auslaßstutzens 26 in geeigneter Weise befestigt, beispielsweise durch Verkleben. Ein Teil der Druckmembran 31 ist im Anschluß an den Auslaßstutzen 26 an der Innenseite 32 der Gehäusewandung befestigt. Der restliche Teil der Druckmembran 31 ist bei gefülltem Gehäuse 19 vorteilhaft mehrfach gefaltet. Die Druckmembran 31 begrenzt die Druckkammer 18, in die über die Druckluftleitung 22 Druckluft zugeführt wird. Aufgrund dieser Druckluft dehnt sich die Druckmembran 31 aus, wodurch die im Gehäuse 19 befindliche Harnstofflösung unter Druck gesetzt wird. Sie strömt dadurch zuverlässig an der gegenüberliegenden Seite des Gehäuses 19 in die Zuführleitung 8. Die Druckmembran 31 ist so gestaltet, daß die Harnstofflösung vollständig aus dem Gehäuse 19 herausgedrückt werden kann.

In der Zuführleitung 8 sitzt unmittelbar vor dem Mischbereich 13 die Dosiereinrichtung 14. In den Mischbereich 13 mündet die Druckluftleitung 15, über die die Druckluft vom Druckversorgungssystem des Fahrzeuges zugeführt wird. In der Druckluftleitung 15 sitzt das Druckreduzierventil 28, mit dem der Druck der Druckluft in gewünschtem Maße verringert wird. Ein Teil dieser Druckluft strömt in der beschriebenen Weise in den Mischbereich 13. Ein anderer Teil dieser Druckluft strömt über das Druckreduzierventil 17 in die Druckluftleitung 22, welche diese im Druck reduzierte Druckluft der Kammer 18 zuführt.

Die Heizeinrichtung 29 ragt im Gegensatz zur vorigen Ausführungsform unmittelbar in die Harnstofflösung im Gehäuse 19. Bei entsprechend tiefen Außentemperaturen wird die Heizeinrichtung 29 eingeschaltet, um ein Gefrieren der Harnstofflösung zu verhindern. Entsprechend der vorigen Ausführungsform kann die Heizeinrichtung elektrisch arbeiten. Vorteilhaft wird durch das Heizrohr 30 der Heizeinrichtung 29 ein Heizmedium gefördert, das dem Heiz- bzw. Kühlsystem des Fahrzeuges entnommen werden kann.

## Patentansprüche

1. Einrichtung zur Abgasnachbehandlung von Dieselmotoren, mit wenigstens einem Vorratsbehälter (1) für eine Harnstofflösung, die mittels einer Pumpe (4) einem Mischbereich zugeführt wird, in den wenigstens eine Druckluftleitung mündet,
**dadurch gekennzeichnet, daß** der Vorratsbehälter (1) eine flexible Wandung und einen Verschluß (5) hat, der wenigstens einen als Stecköffnung ausgebildeten Anschluß (2) aufweist.

2. Einrichtung nach Anspruch 1,
**dadurch gekennzeichnet, daß** der Verschluß (5) einen weiteren Anschluß (7) für eine Luftzuführleitung (8) aufweist.

3. Einrichtung nach Anspruch 1 oder 2,
**dadurch gekennzeichnet, daß** die Anschlüsse (5, 7) durch ein Verschlußelement geschlossen sind.

4. Einrichtung nach Anspruch 3,
**dadurch gekennzeichnet, daß** das Verschlußelement beim Aufsetzen des Vorratsbehälters (1) auf die Pumpenleitung (3) bzw. auf die Luftzuführleitung (8) geöffnet wird.

5. Einrichtung nach einem der Ansprüche 1 bis 4,
**dadurch gekennzeichnet, daß** die Pumpenleitung (3) durch ein Schaltventil (9) absperrbar ist.

6. Einrichtung nach einem der Ansprüche 1 bis 5,
**dadurch gekennzeichnet, daß** in der Pumpenleitung (3) ein Schwimmerventil (11) sitzt.

7. Einrichtung nach einem der Ansprüche 1 bis 6,
**dadurch gekennzeichnet, daß** der Vorratsbehälter (1) auf eine Luftzuführleitung (8) steckbar ist.

8. Einrichtung nach einem der Ansprüche 1 bis 7,
**dadurch gekennzeichnet, daß** mehrere Vorratsbehälter (1) auf Pumpenleitung (3) steckbar sind, die an eine gemeinsame Pumpenleitung (3a) angeschlossen sind.

9. Einrichtung nach Anspruch 8,
**dadurch gekennzeichnet, daß** die Vorratsbehälter (1) auf mehrere Luftzuführleitungen (8) gesteckt sind, die an eine gemeinsame Luftzuführleitung (8a) angeschlossen sind.

10. Einrichtung nach Anspruch 8 oder 9,
**dadurch gekennzeichnet, daß** in jeder Pumpenleitung (3) ein Schaltventil (9) und/oder ein Schwimmerventil (11) sitzt.

11. Einrichtung nach einem der Ansprüche 8 bis 10,
**dadurch gekennzeichnet, daß** in jeder Luftzuführleitung (8) ein Schwimmerventil (10) sitzt.

12. Einrichtung nach einem der Ansprüche 1 bis 11,
**dadurch gekennzeichnet, daß** die Harnstofflösung aus dem Vorratsbehälter (1) ohne Einsatz einer Pumpe ausschließlich unter ihrem Eigengewicht in wenigstens eine Zuführleitung (12) strömt, mit der die Harnstofflösung einem Mischbereich zuführbar ist.

13. Einrichtung nach Anspruch 12,
**dadurch gekennzeichnet, daß** in der Zuführleitung (12) ein Schwimmerventil (11) sitzt.

14. Einrichtung nach Anspruch 12 oder 13,
**dadurch gekennzeichnet, daß** der Durchfluß der Harnstofflösung durch die Zuführleitung (12) durch eine Dosiereinrichtung (14) steuerbar ist.

15. Einrichtung nach einem der Ansprüche 12 bis 14,
**dadurch gekennzeichnet, daß** in den Vorratsbehälter (1) wenigstens eine Luftzuführleitung (8) mündet.

16. Einrichtung nach einem der Ansprüche 12 bis 15,
**dadurch gekennzeichnet, daß** in der Zuführleitung (12) ein Schaltventil (9) zum Sperren der Zuführleitung (12) sitzt.

17. Einrichtung nach Anspruch 15 oder 16,
**dadurch gekennzeichnet, daß** in der Luftzuführleitung (8) ein Schwimmerventil (10) sitzt.

18. Einrichtung nach einem der Ansprüche 15 bis 17,
**dadurch gekennzeichnet, daß** die Luftzuführleitung (8) von der in den Mischbereich (13) mündenden Luftleitung (15) abzweigt.

19. Einrichtung nach einem der Ansprüche 15 bis 18,
**dadurch gekennzeichnet, daß** in der Luftzuführleitung (8) ein Druckreduzierventil (17) liegt.

20. Einrichtung nach einem der Ansprüche 12 bis 19,
**dadurch gekennzeichnet, daß** mehrere, an eine gemeinsame Luftzuführleitung (8a) angeschlossene Vorratsbehälter (1) parallel geschattet und an eine gemeinsame Zuführleitung (12a) angeschlossen sind.

21. Einrichtung nach Anspruch 20,
**dadurch gekennzeichnet, daß** jeder Vorratsbehälter (1) durch ein Schaltventil (9) zuschaltbar ist.

22. Einrichtung nach Anspruch 20 oder 21,
**dadurch gekennzeichnet, daß** in der gemeinsamen Luftzuführleitung (8a) ein Druckreduzierventil (17) sitzt.

23. Einrichtung nach einem der Ansprüche 1 bis 22, bei der die Harnstofflösung über wenigstens eine Zuführleitung einem Mischbereich zuführbar ist,
**dadurch gekennzeichnet, daß** der Vorratsbehälter (1) in einer Druckkammer (18) untergebracht ist, in die wenigstens eine Druckluft-Zuführleitung (22) mündet.

24. Einrichtung nach Anspruch 23,
**dadurch gekennzeichnet, daß** in der Druckluft-Zuführleitung (22) ein Druckreduzierventil (17) sitzt.

25. Einrichtung nach Anspruch 23 oder 24,
**dadurch gekennzeichnet, daß** die Druckluft-Zuführleitung (22) von der Druckluftleitung (15) abzweigt.

26. Einrichtung nach einem der Ansprüche 23 bis 25,
**dadurch gekennzeichnet, daß** der Vorratsbehälter (1) eine flexible Wandung hat.

27. Einrichtung nach einem der Ansprüche 23 bis 26,
**dadurch gekennzeichnet, daß** der Vorratsbehälter (1) auf die Zuführleitung (8) steckbar ist.

28. Einrichtung nach Anspruch 27,
**dadurch gekennzeichnet, daß** der Durchfluß der Harnstofflösung durch die Zuführleitung (8) durch wenigstens eine Dosiereinrichtung (14) steuerbar ist.

29. Einrichtung nach einem der Ansprüche 23 bis 28,
**dadurch gekennzeichnet, daß** in der Druckkammer (18) mehrere Vorratsbehälter (1) untergebracht sind, die parallel geschaltet und an eine gemeinsame Zuführleitung (8a) angeschlossen sind und daß jeder Vorratsbehälter (1) durch ein Schaltventil (9) zuschaltbar ist.

30. Einrichtung nach einem der Ansprüche 1 bis 29,
**dadurch gekennzeichnet, daß** die Wandung (23, 31) des Vorratsbehälters (1) faltenbalgartig ausgebildet ist.

31. Einrichtung nach einem der Ansprüche 1 bis 30,
**dadurch gekennzeichnet, daß** der Vorratsbehälter (1) in einem Gehäuse (19) untergebracht ist.

32. Einrichtung nach Anspruch 31,
**dadurch gekennzeichnet, daß** das Gehäuse (19) wenigstens einen Befüllstutzen (24) und wenigstens einen Auslaßstutzen (26) aufweist.

33. Einrichtung nach Anspruch 31 oder 32,
**dadurch gekennzeichnet, daß** die Wandung (23, 31) des Vorratsbehälters (1) durch Druckbeaufschlagung elastisch verformbar ist.

34. Einrichtung nach einem der Ansprüche 31 bis 33,
**dadurch gekennzeichnet, daß** in das Gehäuse (19) wenigstens eine Druckluft-Zuführleitung (22) mündet, in der ein Druckreduzierventil (17) sitzt.

35. Einrichtung nach einem der Ansprüche 32 bis 34,
**dadurch gekennzeichnet, daß** im Gehäuse (19) wenigstens eine Heizeinrichtung (29) untergebracht ist, die in die Harnstofflösung ragt.

## Claims

1. A device for the exhaust gas after-treatment of diesel engines, comprising at least one storage container (1) for a urea solution, which is supplied by means of a pump (4) to a mixing region into which at least one compressed air line opens,
**characterised in that** the storage container (1) has a flexible wall and a closure (5) which has at least one connection (2) designed as an insertion opening.

2. A device according to Claim 1,
**characterised in that** the closure (5) has a further connection (7) for an air supply line (8).

3. A device according to Claim 1 or 2,
**characterised in that** the connections (5, 7) are closed by means of a closure element.

4. A device according to Claim 3,
**characterised in that** the closure element is opened when the storage container (1) is mounted on the pump line (3) or the air supply line (8).

5. A device according to one of Claims 1 to 4,
**characterised in that** the pump line (3) may be shut off by means of an on-off valve (9).

6. A device according to one of Claims 1 to 5,
**characterised in that** a float valve (11) is seated in the pump line (3).

7. A device according to one of Claims 1 to 6,
**characterised in that** the storage container (1) may be fitted onto an air supply line (8).

8. A device according to one of Claims 1 to 7,
**characterised in that** several storage containers (1) may be fitted onto a pump line (3) which is connected to a common pump line (3a).

9. A device according to Claim 8,
**characterised in that** the storage containers (1) are fitted onto several air supply lines (8) which are connected to a common air supply line (8a).

10. A device according to Claim 8 or 9,
**characterised in that** an on-off valve (9) and/or a float valve (11) is seated in each pump line (3).

11. A device according to one of Claims 8 to 10,
**characterised in that** a float valve (10) is seated in each air supply line (8).

12. A device according to one of Claims 1 to 11,
**characterised in that** the urea solution flows out of the storage container (1) without the use of a pump solely under its own weight into at least one supply line (12) with which the urea solution may be supplied to a mixing region.

13. A device according to Claim 12,
**characterised in that** a float valve (11) is seated in the supply line (12).

14. A device according to Claim 12 or 13,
**characterised in that** the flow of the urea solution through the supply line (12) is controllable by means of a metering device (14).

15. A device according to one of Claims 12 to 14,
**characterised in that** at least one air supply line (8) opens into the storage container (1).

16. A device according to one of Claims 12 to 15,
**characterised in that** an on-off valve (9) is seated in the supply line (12) for shutting-off the supply line (12).

17. A device according to Claim 15 or 16,
**characterised in that** a float valve (10) is seated in the air supply line (8).

18. A device according to one of Claims 15 to 17,
**characterised in that** the air supply line (8) branches off the air line (15) opening into the mixing region (13).

19. A device according to one of Claims 15 to 18,
**characterised in that** a pressure-reducing valve (17) is located in the air supply line (8).

20. A device according to one of Claims 12 to 19,
**characterised in that** several storage containers (1), connected to a common air supply line (8a), are connected in parallel and joined to a common supply line (12a).

21. A device according to Claim 20,
**characterised in that** each storage container (1) may be connected by means of an on-off valve (9).

22. A device according to Claim 20 or 21,
**characterised in that** a pressure-reducing valve (17) is seated in the common air supply line (8a).

23. A device according to one of Claims 1 to 22, in which the urea solution may be supplied via at least one supply line to a mixing region,
**characterised in that** the storage container (1) is housed in a pressure chamber (18) into which at least one compressed air supply line (22) opens.

24. A device according to Claim 23,
**characterised in that** a pressure-reducing valve (17) is seated in the compressed air supply line (22).

25. A device according to Claim 23 or 24,
**characterised in that** the compressed air supply line (22) branches off the compressed air line (15).

26. A device according to one of Claims 23 to 25,
**characterised in that** the storage container (1) has a flexible wall.

27. A device according to one of Claims 23 to 26,
**characterised in that** the storage container (1) may be fitted onto the supply line (8).

28. A device according to Claim 27,
**characterised in that** the flow of the urea solution through the supply line (8) is controllable by means of at least one metering device (14).

29. A device according to one of Claims 23 to 28,
**characterised in that** several storage containers (1) are housed in the pressure chamber (18), which storage containers are connected in parallel and are joined to a common supply line (8a), and **in that** each storage container (1) is connectible by means of an on-off valve (9).

30. A device according to one of Claims 1 to 29,
**characterised in that** the wall (23, 31) of the storage container (1) is designed in the manner of bellows.

31. A device according to one of Claims 1 to 30,
**characterised in that** the storage container (1) is housed in a housing (19).

32. A device according to Claim 31,
**characterised in that** the housing (19) has at least one filler connection (24) and at least one outlet connection (26).

33. A device according to Claim 31 or 32,
**characterised in that** the wall (23, 31) of the storage container (1) is resiliently deformable by means of the application of pressure.

34. A device according to one of Claims 31 to 33,
**characterised in that** at least one compressed air supply line (22) opens into the housing (19), in which line is seated a pressure-reducing valve (17).

35. A device according to one of Claims 32 to 34,
**characterised in that** at least one heating device (29) is housed in the housing (19), which device projects into the urea solution.

## Revendications

1. Dispositif pour le retraitement de gaz d'échappement de moteurs Diesel, comprenant au moins un récipient de réserve (1) pour une solution d'urée qui est amenée, au moyen d'une pompe (4), à une zone de mélange, dans laquelle débouche au moins une conduite d'air comprimé,
**caractérisé en ce que** le récipient de réserve (1) possède une paroi flexible et un système de fermeture (5) qui présente un raccord de branchement (2) réalisé sous forme d'ouverture enfichable à transpercer.

2. Dispositif selon la revendication 1,
**caractérisé en ce que** le système de fermeture (5) présente un autre raccord de branchement supplémentaire (7) pour une conduite d'amenée d'air (8).

3. Dispositif selon la revendication 1 ou 2,
**caractérisé en ce que** les raccords de branchement (5, 7) sont fermés par un élément de fermeture.

4. Dispositif selon la revendication 3,
**caractérisé en ce que** l'élément de fermeture est ouvert lors de la mise en place du récipient de réserve (1) sur la conduite de pompe (3) et respectivement sur la conduite d'amenée d'air (8).

5. Dispositif selon l'une des revendications 1 à 4,
**caractérisé en ce que** la conduite de pompe (3) peut être bloquée par une vanne de commutation (9).

6. Dispositif selon l'une des revendications 1 à 5,
**caractérisé en ce que** dans la conduite de pompe (3) est placée une soupape à flotteur (11).

7. Dispositif selon l'une des revendications 1 à 6,
**caractérisé en ce que** le récipient de réserve (1) peut être enfiché sur une conduite d'amenée d'air (8).

8. Dispositif selon l'une des revendications 1 à 7,
**caractérisé en ce que** plusieurs récipients de réserve (1) peuvent être enfichés sur des conduites de pompe (3) qui sont raccordées à une conduite de pompe (3a) commune.

9. Dispositif selon la revendication 8,
**caractérisé en ce que** les récipients de réserve (1) sont enfichés sur plusieurs conduites d'amenée d'air (8) qui sont raccordées à une conduite d'amenée d'air commune (8a).

10. Dispositif selon la revendication 8 ou 9,
**caractérisé en ce que** dans chaque conduite de pompe (3) et placée une vanne de commutation (9) et/ou une soupape à flotteur (11).

11. Dispositif selon l'une des revendications 8 à 10,
**caractérisé en ce que** dans chaque conduite d'amenée d'air (8) est placée une soupape à flotteur (10).

12. Dispositif selon l'une des revendications 1 à 11,
**caractérisé en ce que** la solution d'urée s'écoule du récipient de réserve (1), sans mise en oeuvre d'une pompe, exclusivement sous l'effet de son propre poids, dans au moins une conduite d'amenée (12) avec laquelle la solution d'urée peut être amenée à une zone de mélange.

13. Dispositif selon la revendication 12,
**caractérisé en ce que** dans la conduite d'amenée (12) est placée une soupape à flotteur (11).

14. Dispositif selon la revendication 12 ou 13,
**caractérisé en ce que** le débit de la solution d'urée à travers la conduite d'amenée (12) peut être commandé par un dispositif de dosage.

15. Dispositif selon l'une des revendications 12 à 14,
**caractérisé en ce que** dans le récipient de réserve (1) débouche au moins une conduite d'amenée d'air (8).

16. Dispositif selon l'une des revendications 12 à 15,
**caractérisé en ce que** dans la conduite d'amenée (12) est placée une vanne de commutation (9) destinée à bloquer la conduite d'amenée (12).

17. Dispositif selon la revendication 15 ou 16,
**caractérisé en ce que** dans la conduite d'amenée d'air (8) est placée une soupape à flotteur (10).

18. Dispositif selon l'une des revendications 15 à 17,
**caractérisé en ce que** la conduite d'amenée d'air (8) est dérivée de la conduite d'air (15) débouchant dans la zone de mélange (13).

19. Dispositif selon l'une des revendications 15 à 18,
**caractérisé en ce que** dans la conduite d'amenée d'air (8) est placée une soupape de réduction de pression (17).

20. Dispositif selon l'une des revendications 12 à 19,
**caractérisé en ce que** plusieurs récipients de réserve (1), qui sont raccordés à une conduite d'amenée d'air commune (8a), sont montés en parallèle et sont raccordés à une conduite d'amenée commune (12).

21. Dispositif selon la revendication 20,
**caractérisé en ce que** chaque récipient de réserve (1) peut être mis en circuit par l'intermédiaire d'une vanne de commutation (9).

22. Dispositif selon la revendication 20 ou 21,
**caractérisé en ce que** dans la conduite d'amenée d'air commune (8a) est placée une soupape de réduction de pression (17).

23. Dispositif selon l'une des revendications 1 à 22, dans lequel la solution d'urée peut être amenée par l'intermédiaire d'au moins une conduite d'amenée, à une zone de mélange,
**caractérisé en ce que** le récipient de réserve (1) est logé dans une chambre de pression (18) dans laquelle débouche au moins une conduite d'amenée d'air comprimé (22).

24. Dispositif selon la revendication 23,
**caractérisé en ce que** dans la conduite d'amenée d'air comprimé (22) est placée une soupape de réduction de pression (17).

25. Dispositif selon la revendication 23 ou 24,
**caractérisé en ce que** la conduite d'amenée d'air comprimé (22) est dérivée de la conduite d'air comprimé (15).

26. Dispositif selon l'une des revendications 23 à 25,
**caractérisé en ce que** le récipient de réserve (1) possède une paroi flexible.

27. Dispositif selon l'une des revendications 23 à 26,
**caractérisé en ce que** le récipient de réserve (1) peut être enfiché sur la conduite d'amenée (8).

28. Dispositif selon la revendication 27,
**caractérisé en ce que** le débit de la solution d'urée à travers la conduite d'amenée (8) peut être commandé par au moins un dispositif de dosage (14).

29. Dispositif selon l'une des revendications 23 à 28,
**caractérisé en ce que** dans la chambre de pression (18) sont logés plusieurs récipients de réserve (1), qui sont montés en parallèle et sont raccordés à une conduite d'amenée (8) commune, et **en ce que** chaque récipient de réserve (1) peut être mis en service par l'intermédiaire d'une vanne de commutation (9).

30. Dispositif selon l'une des revendications 1 à 29,
**caractérisé en ce que** la paroi (23, 31) du récipient de réserve (1) est d'une configuration en forme de soufflet.

31. Dispositif selon l'une des revendications 1 à 30,
**caractérisé en ce que** le récipient de réserve (1) est logé dans un carter (19).

32. Dispositif selon la revendication 31,
**caractérisé en ce que** le carter (19) présente au moins un embout de remplissage (24) et au moins un embout de sortie (26).

33. Dispositif selon la revendication 31 ou 32,
**caractérisé en ce que** la paroi (23, 31) du récipient de réserve (1) peut être déformée de manière élastique en étant soumise à la pression.

34. Dispositif selon l'une des revendications 31 à 33,
**caractérisé en ce que** dans le carter (19) débouche au moins une conduite d'amenée d'air comprimé (22) dans laquelle est placée une soupape de réduction de pression (17).

35. Dispositif selon l'une des revendications 32 à 34,
**caractérisé en ce que** dans le carter (19) est logé au moins un dispositif de chauffage (29) qui s'engage dans la solution d'urée.
